(19) Europäisches Patentamt
European Patent Office
Office européen des brevets

(11) Publication number: **0 076 580**
**B1**

# (12) EUROPEAN PATENT SPECIFICATION

(45) Date of publication of patent specification: **10.09.86**

(51) Int. Cl.⁴: **A 01 N 43/90**

(21) Application number: **82304813.7**

(22) Date of filing: **13.09.82**

## (54) Method of combating nematode pests of plants and compositions therefor.

(30) Priority: **06.10.81 GB 8130112**

(43) Date of publication of application:
**13.04.83 Bulletin 83/15**

(45) Publication of the grant of the patent:
**10.09.86 Bulletin 86/37**

(84) Designated Contracting States:
**AT BE CH DE FR GB IT LI NL SE**

(58) References cited:
**EP-A-0 001 689**
**GB-A-2 056 986**

**EXPERIENTIA, vol. 37, no. 9, September 1981, pages 963-964, Basel (CH); I. PUTTER et al.: "Avermectins: novel insecticides, acaricides and nematicides from a soil microorganism".**

(73) Proprietor: **IMPERIAL CHEMICAL INDUSTRIES PLC**
**Imperial Chemical House Millbank**
**London SW1P 3JF (GB)**

(72) Inventor: **Clayton, Jeffery**
**Laburnums Tilehurst Lane**
**Binfield Berkshire (GB)**
Inventor: **Jutsum, Alan Richard**
**9 Leney Close**
**Wokingham Berkshire (GB)**

(74) Representative: **Bishop, Nigel Douglas et al**
**Imperial Chemical Industries PLC Legal Department: Patents PO Box 6 Bessemer Road**
**Welwyn Garden City Herts, AL7 1HD (GB)**

**EP 0 076 580 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of combating nematode pests of plants and to compositions for use in the method.

Nematodes are economically important pests of agriculture which affect adversely the yields of many food and fibre crops. The nematodes are soil dwelling pests which attack the roots of plants. They are difficult to control and measures proposed previously involve fumigation of the soil with volatile halocarbon toxicants such as dichlorodibromoproprene or treatment of the soil with nematocidally active insecticides such as oxamyl or carbofuran. It has long been recognised that the most effective treatment would be one in which the toxicant is applied to the aerial parts of the plants by spraying or dusting and is then translocated to the roots to combat and control the nematode pests surrounding and attacking the roots but this method has never been very successfully practised with the known toxicants because they do not have adequate translocation properties.

Thus it has been shown by Putter et al (Experientia (1981), *37*(9), 963—4) that certain naturally occurring avermectins may be used to combat nematode pests of plants by direct incorporation in the soil at rates of 0.16 to 0.24 kg/ha, and that application to foliage of compositions containing 0.05 to 25 ppm can be used to control mite pests. From EP—A—1689 it is known that certain hydrogenated avermectins may be used to combat pests of plants including nematodes, and from GB—A—2056986 it is known that the foliar application of milbemycins in the form of compositions containing 0.03 to 30 ppm can be used to combat foliar pests such as mites.

However, these documents do not suggest that nematodes in the soil can be effectively controlled by application of these agents to the foliage.

We have now discovered that certain macrolide antibiotic materials have both the necessary translocation and the nematocidal properties to permit the successful and practical application of this desirable method of nematode control.

Accordingly the present invention provides a method of combating and controlling soil dwelling nematode pests of growing plants rooted in the soil and susceptible to damage by nematode pests which comprises applying to the aerially exposed parts of the plant, a nematocidally effective amount of a composition comprising from 500 to 4000 parts per million of an insecticidally active macrolide substance, selected from C—076 and B—41 antibiotics and their simple derivatives (including acylated derivatives and aglycones). C—076 and B—41 macrocyclic antibiotic substances and their derivatives (hereinafter called the active ingredients) are fully described in the following patents viz. US Patent Nos 3998699, 3992527, 3992551, 3992552, 3984564, 3950360, 4134973, 4093629, 4199569, 4206205, 4201861, 4171314 and 4203976, British Patents 1573955 and 1390336 and published Netherlands Patent Application No. 80047912A and European Patent Application No. 0008184. Such C—076 antibiotics are also known as avermectins and B—41 antibiotics are also known as milbemycins. Particular examples of C—076 antibiotics useful in the invention method include that known as avermectin $B_1a$ the structure of which is given by Chabala *et al,* J.Agric Food Chem 1981, *29,* 881—884 at 885, and that known as Ivermectin which is the 22,23-dihydro derivative of avermectin $B_1a$ and has the structure:

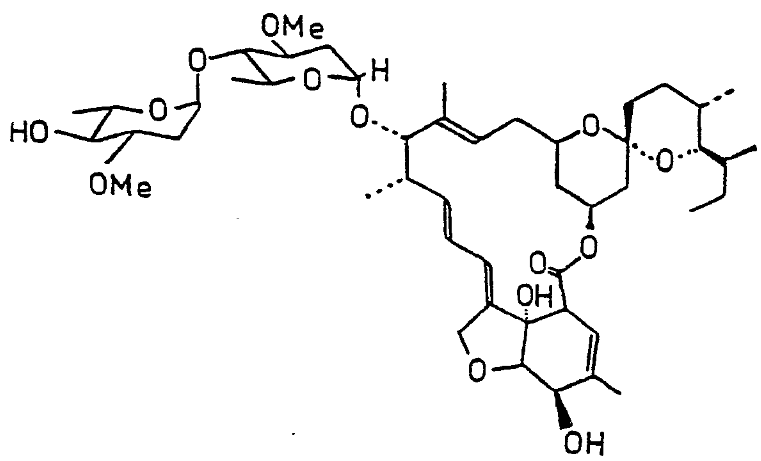

A particular example of a B—41 macrolide substance is that known as milbemycin B—41D which is described in Netherlands Patent Application No. 8004791A, having the structure:

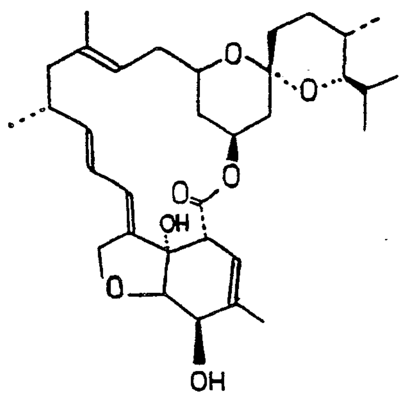

C—076 and B—41 macrolide substances are obtained by fermentation processes using certain *Streptomyces* species.

A particularly useful C—076 producing *Streptomyces* species is that known as *Streptomyces avermitilis* a culture of which has been deposited in the permanent culture collection of the Fermentation Section of the Northern Utilization Research Branch, US, Department of Agriculture at Peoria, Illinois, USA and has been assigned to accession number NRRL 8165. A further sample of this culture has been deposited, without restriction as to availability, in the permanent culture collection of the American Type Culture Collection at 12301 Parklawn Drive, Rockville, Maryland 20852, USA, and has been assigned the accession number ATCC 31267. Other strains and mutants of *S. avermitilis* may also be used in this invention process, including, for example, those deposited at the American Type Culture Collection under the accession numbers ATCC 31271 and 31272.

A particularly useful B—41 producing *Streptomyces* species is that known as the B41—146 strain (fully described in US patent 3,984,564) which has been deposited at the Research Institute of Industrial Technology of Micro-organisms, Agency of Industrial Science and Technology of Japan, under the deposition number Bikokenkinki no 1438, and at the Northern Research Laboratory, US Department of Agriculture, Peoria, Illinois, USA under the deposit number NRRL 5739. The process of producing B—41D is set forth in US Patent 4,346,171.

A yet further macrolide substance produced by a *Streptomyces* species which may also be useful in the method of the invention is that described in published European Patent Application no. 0050964, a sample of which has been deposited at the American Type Culture Collection under the accession number 31587.

The method of the invention is preferably performed by applying to the foliage of the plant a sprayable liquid composition either using a conventional spray system or an electrodynamic spray system, the compositions comprising from 500—4,000 ppm of the active ingredients in volumes of between 10 and 1000 l/ha. The method may be widely practised on crops having aerial foliage and liable to infestation by soil dwelling nematodes, such as for example, vegetable crops such as potatoes and tomatoes, citrus crops, tobacco, bananas, and root crops such as sugar beet.

Species of nematodes which may be controlled by the invention method include the following:

| | |
|---|---|
| *Globodera rostochiensis* | (potato cyst nematode) |
| *Heterodera schachtii* | (beet cyst nematode) |
| *Meloidogyne incognita* | (root knot nematode) |
| *Meloidogyne javanica* | (tobacco root knot nematode) |
| *Pratylenchus penetrans* | (lesion nematode) |
| *Radopholus similis* | (burrowing nematode) |
| *Tylenchulus semipenetrans* | (citrus nematode) |

The translocation of the active ingredient from the sprayed foliage to the roots, which is believed to be via the phloem system of the plant, is extremely rapid and nematodes in the soil adjacent to the roots are controlled within one day of application. The treatment also provides long lasting control. Thus nematodes are controlled to an extent of 90% or more for a period of more than two weeks after spraying an ivermectin

composition containing 0.1% by weight of the active ingredient. The treatment causes the root to produce a nematode controlling exudate which probably contains the macrolide or a derivative or metabolite thereof. This exudate can be collected for at least two weeks after treatment by washing the roots of the treated plants and can be shown to be active against nematodes of the species *Meloidogyne incognita.*

Because the method of the invention relies upon foliar application of the macrolide a single treatment may be used to combat nematode pests in the soil and other insect pests on the foliage. This is particularly useful in crops such as sugar beet which are susceptible both to nematode damage and infection with virus disease borne by aphids.

Compositions for use in the invention include sprayable liquid compositions obtained by water dilution of emulsifiable concentrates, suspension concentrates, soluble liquid compositions and the like. Such sprayable compositions may contain from 500—4,000 ppm of the macrolide substance. The concentrated compositions, in the form in which they are prepared, transported and stored, may contain from 0.5 to 50% by weight of the macrolide, depending upon the type of composition. Generally soluble liquid compositions have lower concentrations of active ingredient than emulsifiable concentrates or suspension concentrates. The compositions also contain surface active agent (emulsifying agents) in an amount from 1 to 20% by weight. These surface agents are usually selected from anionic types such as alkali metal or alkaline earth metal salts of sulphosuccinate or lignosulphonic acids, e.g. sodium dioctylsulphosuccinate, sodium and calcium lignosulphonates, and nonionic types such as ethoxylated alkyl phenols and alcohols, e.g. ethoxylated nonylphenol. Suspension concentrates may also contain antisettling agents such as bentonite to improve the shelf life of the compositions.

The method of the invention is illustrated by the following Examples.

Example 1

A preparation containing 500 parts per million of avermectin $B_1a$ was prepared by dissolving the compound in a mixture of diethyl carbonate, acetone and ethanol (1:1:1 by volume) containing 6% by volume of a wetting agent known as 'Arylan' CA. ('Arylan' is a Registered Trade Mark. 'Arylan' CA is a 70% w/v solution of calcium dodecylbenzenesulphonate in *n*-butanol).

The mixture was diluted with a 5% w/v sucrose solution such that the diluted mixture contained 5% by volume of the solvent mixture. 0.67 ml of the diluted mixture was then applied to the upper and lower leaf surfaces and the aerial part of the stems of young tomato plants rooted in soil-filled pots. Three replicates were used for each rate of chemical applied. 48 hours later the soil in each pot was inoculated with 600—700 larvae (ca. 24 hours old) of the root knot nematode *Meloidogyne incognita* and the pots were then kept at 25°C and 60—70% RH for three weeks, with twice daily watering of the soil surface. At the end of this period the plants were removed from the soil and the number of root knots assessed and compared with those developed in control plants. There was a 77% reduction in the number of root knots in the treated plants.

The known nematocide oxamyl produced only 9% reduction when applied in the same manner at a rate of 2000 ppm.

Example 2

This Example illustrates the persistence of nematicidal effect obtained by the method of the invention.

Young tomato plants rooted in soil-filled pots were sprayed with 5 ml of preparations containing 4000, 2000 and 1000 parts per million of ivermectin. (The preparations were otherwise identical to that of Example 1). The soil of different groups of pots was inoculated with day old *Meloidogyne incognita* larvae in the manner of Example 1 after 2, 7 and 14 days (A, B and C in the following table) and the percentage root knot reduction (compared with a control) assessed in the manner of Example 1. The results were as follows:

| | % Root knot reduction | | |
|---|---|---|---|
| Rate (ppm) | A | B | C |
| 4000 | 96 | 100 | 100 |
| 2000 | 87 | 99 | 100 |
| 1000 | 86 | 93 | 99 |

Example 3

This Example illustrates an emulsion concentrate suitable for application, when diluted, in the method of the invention.

| Ingredient | % w/w |
|---|---|
| Ivermectin | 10.0 |
| 'Aerosol' OT | 3.0 |
| Synperonic' OP10 | 7.0 |
| 'Solvesso' 100 | to 100 |

('Aerosol', 'Synperonic' and 'Solvesso' are Registered Trade Marks)
'Aerosol' OT is an anionic emulsifying agent based on sodium dioctylsulphosuccinate. 'Synperonic' OP10 is a nonionic emulsifying agent based on ethoxyalted octylphenol. 'Solvesso' 100 is a solvent blend of lower alkylated benzenes).

Example 4

This Example illustrates a soluble liquid composition suitable for use in the method of the invention.

| Ingredient | % w/w |
|---|---|
| Ivermectin | 1.0 |
| 'Synperonic' A20 | 10.0 |
| Diacetone alcohol | to 100 |

('Synperonic' A20 is a nonionic emulsifying agent based on ethoxylated alcohol).

Example 5

This Example illustrates a suspension concentrate suitable after dilution with water for use in the method of the invention.

| Ingredient | % w/w |
|---|---|
| Ivermectin | 10.0 |
| 'Polyfon' H | 2.0 |
| 'Synperonic' NX | 1.0 |
| Bentonite | 2.0 |
| Water | to 100 |

('Polyfon' is a Registered Trade Mark. 'Polyfon' H is an anionic emulsifying agent based on sodium lignosulphonate. 'Synperonic' NX is a nonionic emulsifying agent based on ethoxylated nonyl phenol).

The preceding Examples of compositions for use in the method of the invention illustrate ivermectin as the macrolide ingredient. Similar compositions may be prepared using other macrolide substances such as avermectin $B_1a$, milbemycin B—41D, in place of ivermectin.

**Claims**

1. A method of combating and controlling soil dwelling nematode pests of growing plants rooted in the soil and susceptible to damage by nematode pests which comprises applying to the aerially exposed foliar parts of the plant a nematicidally effective amount of a composition comprising from 500 to 4000 parts per million an insecticidally active macrolide substance selected from the group of such substances consisting of C—076 and B—41 macrolides and their simple derivatives.

2. The method of claim 1 wherein the macrolide substance is a C—076 macrolide selected from avermectins and 22,23-dihydroavermectins.

3. The method of claim 2 wherein the macrolide substance is avermectin $B_1a$ or ivermectin.

4. The method of claim 1 wherein the macrolide substance is a milbemycin.

5. The method of claim 4 wherein the macrolide substance is milbemycin B—41D.

**Patentansprüche**

1. Verfahren zur Bekämpfung und Eindämmung von im Boden lebenden Nematodenschädlingen von Pflanzen, die mit ihren Wurzeln in diesem Boden wachsen und denen eine Schädigung durch die Nematodenschädlinge droht, bei welchem auf die frei der Luft ausgesetzten Blatt-teile der Pflanze eine nematicid wirksame Menge einer Zusammensetzung aufgebracht wird, die 500 bis 4000 Teile je Million eines insecticid wirksamen Macrolidstoffs enthält, der aus C—076— und B—41—Macroliden und deren einfachen Derivaten ausgewählt ist.

2. Verfahren nach Anspruch 1, bei welchem der Macrolidstoff ein C—076—Macrolid ist, das aus Avermectinen und 22,23-Dihydroavermectinen ausgewählt ist.

3. Verfahren nach Anspruch 2, bei welchem der Macrolidstoff Avermectin—$B_1a$ oder Ivermectin ist.

4. Verfahren nach Anspruch 1, bei welchem der Macrolidstoff ein Milbemycin ist.

5. Verfahren nach Anspruch 4, bei welchem der Macrolidstoff Milbemycin—B—41D ist.

**Revendications**

1. Procédé pour combattre et détruire des nématodes vivant dans le sol, parasites de plantes cultivées qui sont enracinées dans le sol et susceptibles d'être endommagées par des nématodes parasites, qui consiste à appliquer aux parties foliaries de la plante exposées à l'air libre une quantité à effet nématicide d'une composition comprenant 500 à 4000 parties par million d'une substance macrolide douée d'activité insecticide choisie dans le groupe des substances comprenant les macrolides C—076 et B—41 et leurs dérivés simples.

2. Procédé suivant la revendication 1, dans lequel la substance macrolide est un macrolide C—076 choisi entre des avermectines et des 22,23-dihydroavermectines.

3. Procédé suivant la revendication 2, dans lequel la substance macrolide est l'avermectine $B_1a$ ou l'ivermectine.

4. Procédé suivant la revendication 1, dans lequel la substance macrolide est une milbémycine.

5. Procédé suivant la revendication 4, dans lequel la substance macrolide est la milbémycine B—41D.